# EUROPÄISCHE PATENTSCHRIFT

(11) **EP 2 670 621 B1**
(45) Veröffentlichungstag und Bekanntmachung des Hinweises auf die Patenterteilung: **06.12.2017**
(21) Anmeldenummer: 11807879.9
(22) Anmeldetag: 08.12.2011
(51) Int. Cl.: B60L 11/18, G06F 21/86, G07F 15/00

(54) **LADESTATION UND VERFAHREN ZUM SICHERN EINER LADESTATION**
CHARGING-STATION AND METHOD FOR SECURING A CHARGING-STATION
STATION DE CHARGE ET METHODE POUR SECURISER UNE STATION DE CHARGE

(30) Priorität: 03.02.2011 DE 102011010319
(43) Veröffentlichungstag der Anmeldung: 11.12.2013
(73) Patentinhaber: innogy SE, 45128 Essen (DE)
(72) Erfinder: GAUL, Armin, 59379 Selm (DE)
(74) Vertreter: Cohausz & Florack
(86) Internationale Anmeldenummer: PCT/EP2011/072210
(87) Internationale Veröffentlichungsnummer: WO 2012/103978

(56) Entgegenhaltungen:
- WO-A2-2010/074644
- US-A1- 2006 049 941
- US-A1- 2007 045 411
- US-A1- 2008 028 247
- "Remote Wipe Software for Android", , 29. Juli 2010 (2010-07-29), XP55021143, Gefunden im Internet: URL:http://www.xda-developers.com/android/ remote-wipe-software-for-android/ [gefunden am 2012-03-07]
- Anonymous: "Device Administration | Android Developers", , 15 October 2010 (2010-10-15), XP055363275, Retrieved from the Internet: URL:https://web-beta.archive.org/web/20101 110012228/https://developer.android.com/gu ide/topics/admin/device-admin.html [retrieved on 2017-04-10]

## Beschreibung

Der Gegenstand betrifft ein Verfahren zum Sichern von Messdaten in einer Ladestation vor Fremdzugriffen sowie eine Ladestation, die vor Fremdzugriffen auf gespeicherte Messdaten gesichert ist.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat.

Um dies sicherzustellen, müssen Abrechungsdaten, wie beispielsweise Strommenge, Zählerstände, Ladezeiten und Nutzeridentifikation, erfasst werden. Zum Einen ist es notwendig, dass die Daten über die Lademenge als auch den Kunden unverfälscht bleiben. Zum Anderen ist aus eichrechtlichen Gesichtspunkten eine Speicherung der erfassten Messdaten (Abrechnungsdaten) wie Energiemenge, Zählerstände, Ladezeiten, Nutzeridentifikationen, in der Ladestation notwendig. Diese Speicherung sollte in einem Ringspeicher für bis zu 90 Tage vorgehalten werden können.

Die lokale Speicherung der Messdaten in der Ladestation selbst bietet aber eine ideale Angriffsfläche, um personenbezogene, sensible Daten unerlaubt abzugreifen. Neben einem Angriff aus dem Datennetz heraus stellt ein unmittelbarer mechanischer Angriff, bei dem der Messdatenspeicher entwendet wird, das größte Gefahrenpotential dar.

Aus diesem Grunde lag dem Gegenstand die Aufgabe zugrunde, ein Verfahren sowie eine Vorrichtung zur Verfügung zu stellen, welche eine sichere Speicherung von Messdaten in einer Ladestation gewährleisten.

Zur Lösung der Aufgabe wird gegenständlich ein Verfahren nach Anspruch 1 vorgeschlagen. Bei dem gegenständlichen Verfahren werden Ladevorgänge repräsentierende Messdaten erfasst. Messdaten im Sinne des Gegenstandes können die oben genannten Abrechnungsdaten neben weiteren Daten sein. So ist es beispielsweise bei einem Laden eines Elektrofahrzeugs notwendig, neben der Nutzeridentifikation auch den Anfangs- und den Endzählerstand des Energiezählers zu erfassen. Darüber hinaus sollte beispielsweise eine Zähleridentifikation und ein Datum sowie eine Uhrzeit erfasst werden. Auch können Statusinformationen über den Zähler erfasst werden, dass heißt Informationen, ob der Zähler manipuliert wurde oder nicht. Außerdem können laufende Nummern erfasst werden, mit denen sichergestellt werden kann, dass keine Manipulationen am Zähler stattgefunden haben. Darüber hinaus können auch öffentliche Schlüssel erfasst werden, mit denen eine Verschlüsselung der Daten vollzogen werden kann. Alle diese Messdaten können gegenständlich erfasst werden.

Nach Abschluss eines Ladevorgangs werden die Messdaten gegenständlich gespeichert und in einem Messdatenspeicher vorgehalten. Wie bereits eingangs erwähnt, müssen diese Messdaten aus eichrechtlichen Gründen in der Ladestation selbst gespeichert bleiben. Daher ist der Messdatenspeicher an der Ladestation angeordnet. Der Messdatenspeicher ist so eingerichtet, dass er die Messdaten für einen bestimmen Zeitraum, beispielsweise 30 Tage, 90 Tage oder auch länger speichert und danach selbsttätig löschen kann und dies vorzugsweise auch tut. Auch ist es möglich, dass die Messdaten durch ein Löschsignal von einem zentralen Abrechnungscomputer gesteuert gelöscht werden. Zumindest aber wird eine Vielzahl von Messdaten in dem Messdatenspeicher vorgehalten, so dass der Messdatenspeicher eine Vielzahl von sensiblen, personenbezogenen Daten aufweist. Ein Angriff auf den Messdatenspeicher, beispielsweise ein Entwenden des Messdatenspeichers, muss verhindert werden, da ansonsten die Daten ausgelesen werden könnten und somit Missbrauch möglich wäre.

Aus diesem Grunde wird gegenständlich die Integrität der Ladestation überwacht. Integrität der Ladestation kann in dem Sinne verstanden werden, dass die Unversehrtheit der Ladestation oder das Aufrechterhalten der Energieversorgung der Ladestation überwacht wird. Integrität der Ladestation kann insofern verstanden werden, dass überwacht wird, ob ein äußerer Zugriff auf die Messdaten bzw. den Messdatenspeicher erfolgt oder eine Manipulation einer Ladestation hinsichtlich der Energieversorgung vorgenommen wird.

Bei einer detektierten Verletzung der Integrität der Ladestation wird gegenständlich ein Steuermarker gesetzt. Ein Steuermarker kann ein Signal, eine Signalfolge, ein Bit, eine Bitfolge oder ein Datum sein, welches anzeigt, dass eine Verletzung der Integrität der Ladestation stattgefunden hat. Mit Hilfe des Steuermarkers wird gegenständlich zumindest mittelbar ein Löschen der Messdaten in dem Messdatenspeicher bewirkt. Zumindest mittelbar bedeutet, dass bei dem Setzen des Steuermarkers entweder unmittelbar die Messdaten gelöscht werden oder in einem zeitlichen Versatz. So kann beispielsweise bei einer Manipulation der Energieversorgung oder beim Ausfall der Energieversorgung nicht sichergestellt werden, dass der Messdatenspeicher unmittelbar beim Setzen des Steuermarkers gelöscht wird, da ja die Energieversorgung unterbrochen sein kann. In diesem Fall wird zumindest der Steuermarker gesetzt, so dass bei Wiederkehren der Energieversorgung ein Löschen der Messdaten in dem Messdatenspeicher bewirkt werden kann. Mit Hilfe des gegenständlichen Verfahrens ist es möglich, die Messdaten in dem Messdatenspeicher gegenüber Zugriffen von außen zu schützen und gleichzeitig eichrechtliche Bedingungen zu erfüllen.

Gemäß einem vorteilhaften Ausführungsbeispiel wird vorgeschlagen, dass beim Überwachen der Integrität zumindest die strukturelle Integrität eines Gehäuses der Ladestation oder die Energieversorgung der Ladestation überwacht wird. Wie eingangs bereits erläutert, kann ein Zugriff auf den Messdatenspeicher dann erfolgen, wenn das Gehäuse der Ladestation geöffnet wird. Auch andere Manipulationen an dem Gehäuse, die die strukturelle Integrität des Gehäuses verletzen, können dazu führen, dass die Messdaten aus dem Messdatenspeicher ausgelesen werden können. Mit Hilfe des gegenständlichen Verfahrens ist es möglich, die strukturelle Integrität des Gehäuses der Ladestation zu überwachen.

Auch ist es möglich, bei einem Angriff auf die Ladestation zunächst die Energieversorgung zu unterbrechen, in der Hoffnung, dass dann die Schutzmechanismen versagen. Um einem solchen Angriff entgegenzuwirken, wird auch vorgeschlagen, dass bei der Überwachung der Integrität die ungestörte Energieversorgung überwacht wird. Auch dann kann sichergestellt werden, dass bei einer Manipulation der Energieversorgung die Messdaten in dem Messdatenspeicher vor Zugriffen gesichert sind.

Gemäß einem vorteilhaften Ausführungsbeispiel wird vorgeschlagen, dass mittels eines Energiespeichers zumindest die Energiemenge gespeichert wird, die notwendig ist, um bei einer Verletzung der Integrität der Ladestation den Steuermarker auszugeben und/oder zu speichern. Wird beispielsweise die Energieversorgung unterbrochen, so kann mittels eines Energiespeichers dafür gesorgt werden, dass zum Einen die Sensoren, die die strukturelle Integrität des Gehäuses überwachen, weiterhin betrieben werden und/oder zum Anderen auch, dass der Steuermarker noch gesetzt werden kann. Energiespeicher können beispielsweise Kondensatoren, Akkumulatoren oder Batterien sein. Mit Hilfe dieser Energiespeicher kann sichergestellt werden, dass auch bei einer unterbrochenen Energieversorgung der Steuermarker ausgegeben werden kann. Auch kann mittels der Energiespeicher ein Speichern des Steuermarkers sichergestellt werden.

Der Steuermarker wird in einem nicht flüchtigen Speicher in der Ladestation oder einem zentralen Computer gespeichert. Wird der Steuermarker in einem nicht flüchtigen Speicher in der Ladestation gespeichert, kann dieser unmittelbar in dem Speicher eingeschrieben und ausgelesen werden. Der nicht flüchtige Speicher ist vorzugsweise unmittelbar mit dem Messdatenspeicher verknüpft bzw. integraler Bestandteil des Messdatenspeichers, so dass es beispielsweise möglich ist, dass, sobald der Messdatenspeicher mit Energie versorgt wird, der Zustand des Steuermarkers ausgelesen wird und wenn dieser gesetzt ist, der Messdatenspeicher unmittelbar gelöscht wird. Auch ist es möglich, dass der Steuermarker an einem zentralen Computer übermittelt und dort gespeichert wird. In diesem Fall ist der zentrale Computer vorzugsweise eine Abrechnungszentrale, die neben Abrechnungsdaten auch die Überwachung der Ladestation übernimmt. Wird der Steuermarker in dem zentralen Computer gespeichert, so ist vorzugsweise die Energiemenge des Energiespeichers so groß, dass mittels des Kommunikationsmittels der gesetzte Steuermarker noch an den zentralen Computer übermittelt werden kann, auch wenn die Energieversorgung unterbrochen ist.

Bei einer Wiederaufnahme der Energieversorgung der Ladestation wird der Steuermarker von einem zentralen Computer abgefragt oder bereitgestellt oder in der Ladestation gelesen, wodurch das Löschen der Messdaten in dem Messdatenspeicher bewirkt wird. Wenn die Ladestation mit einer Energieversorgung verbunden wird, so fährt diese in einem Bootvorgang hoch. Während des Hochfahrens wird der Steuermarker überprüft. Wenn dieser gesetzt ist, muss ein Löschen der Messdaten in dem Messdatenspeicher erfolgen, da der gesetzte Steuermarker darauf hinweist, dass eine Manipulation der Ladestation stattgefunden haben könnte. Daher wird bei einer Wiederaufnahme der Energieversorgung unmittelbar im Bootvorgang der Steuermarker entweder vom zentralen Computer abgefragt oder bereitgestellt oder in der Ladestation gelesen.

Um festzustellen, ob das Gehäuse der Ladestation geöffnet wird oder eine sonstige Manipulation an der strukturellen Integrität der Ladestation stattfindet, werden vorzugsweise Sensoren eingesetzt. Diese sind vorzugsweise aus der Gruppe aus Reed-Kontakt, Erschütterungs-, Licht-, Photosensor. Mit Hilfe dieser Kontakte ist es möglich, ein Öffnen, ein Bewegen oder ein Zerstören der Ladestation festzustellen. Wenn einer der Sensoren anschlägt, kann von einer Verletzung der strukturellen Identität ausgegangen werden, was dazu führt, dass der Steuermarker gesetzt wird.

Um eine Unterbrechung der Energieversorgung feststellen zu können, können auch Strom- oder Spannungssensoren zum Einsatz kommen.

Gemäß einem vorteilhaften Ausführungsbeispiel wird vorgeschlagen, dass die Messdaten durch ein tiefes Formatieren des Messdatenspeichers gelöscht werden. Regelmäßig finden Formatierungsvorgänge an Messdatenspeichern statt. Diese führen jedoch nicht immer dazu, dass die gespeicherten Daten nicht mehr ausgelesen werden können. Beim Formatieren ist es zum Einen möglich, lediglich die Sektortabellen zu löschen, so dass die Daten weiterhin auf dem Datenspeicher vorhanden sind, jedoch nicht unmittelbar darauf zugegriffen werden kann. Anders ist dies beim tiefen Formatieren. Hierbei werden die Daten mit Pseudodaten überschrieben, so dass nachträgliches Auslesen der vorherigen Daten unmöglich wird, auch wenn eine Sektortabelle wiederhergestellt würde.

Gemäß einem vorteilhaften Ausführungsbeispiel wird vorgeschlagen, dass die Messdaten zumindest ein Satz aus Kundennummer, Zählwert eines Energiezählers, Datum, Uhrzeit, Statuswert des Energiezählers, Vertragsnummer oder dergleichen umfassen.

Ein weiterer Gegenstand ist eine Ladestation für Elektrofahrzeuge nach Anspruch 7.

Die Merkmale der Verfahren und Vorrichtungen sind frei miteinander kombinierbar. Insbesondere können Merkmale der abhängigen Ansprüche auch unter teilweiser oder gänzlicher Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:

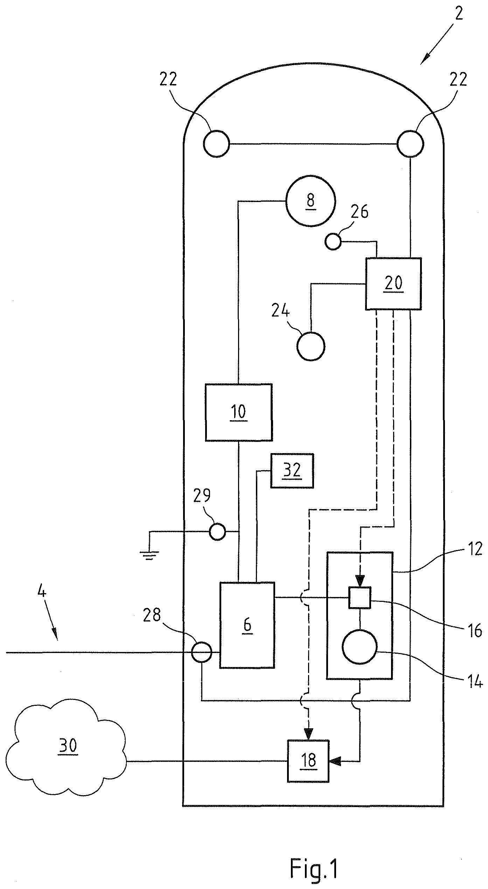

Fig. 1 einen Aufbau einer gegenständlichen Ladestation;

Fig. 1 zeigt eine Ladestation 2 die mit einem Energieversorgungsnetz 4 verbunden ist. Das Energieversorgungsnetz 4 ist mit einer Mess- und Zähleinrichtung 6 verbunden. Die Mess- und Zähleinrichtung 6 dient zum Messen und Zählen des Energieverbrauchs, für einen Ladevorgang eines Elektrofahrzeugs. Ein Ladevorgang eines Elektrofahrzeugs wird über eine Ladesteckdose 8 und ein nicht gezeigtes Kabel durchgeführt. Die Ladesteckdose 8 bzw. die Kontakte in der Ladesteckdose 8 sind mit einem Ladesteuergerät 10 verbunden, welches den Ladevorgang mit einem Elektrofahrzeug steuert. Das Ladesteuergerät 10 ist mit der Mess- und Zähleinrichtung 6 verbunden und bezieht über die Mess- und Zähleinrichtung 6 Energie, welche über die Ladesteckdose 8 dem Elektrofahrzeug über ein Ladekabel zur Verfügung gestellt wird.

Die bei einem Ladevorgang erfassten Messdaten der Mess- und Zähleinrichtung 6 werden in einem Messdatenspeicher 12 gespeichert. Der Messdatenspeicher 12 kann einen integrierten Speicherbaustein 14 zum Speichern von Messdaten und einen nicht flüchtigen Speicher 16 zum Speichern eines Steuermarkers aufweisen. Der Speicherbaustein 14 kann ein Flash-Speicher sein. Auch ist es möglich, dass der Speicherbaustein 14 ein Magnetspeicher, beispielsweise eine Festplatte ist. Auch ist es möglich, dass der Speicherbaustein 14 eine Solid State Disc ist. Andere Speicherbausteine 14 sind ebenfalls möglich.

Ferner ist in der Ladestation 2 eine Kommunikationseinrichtung 18 vorgesehen, die über das Internet 30 beispielsweise mit einem nicht dargestellten Abrechnungscomputer kommunizieren kann. Die Kommunikationseinrichtung 18 dient zum Einen zum Kommunizieren von in dem Messdatenspeicher 12 gespeicherten Messdaten an den Abrechnungscomputer und optional auch zum Kommunizieren des Steuermarkers an den Abrechnungscomputer.

Um zu überwachen, ob die Integrität der Ladestation 2 verletzt wird, dient eine Überwachungseinrichtung 20. Die Überwachungseinrichtung 20 ist mit verschiedenen Sensoren verbunden. So kann in der Ladestation 2 beispielsweise ein Satz von Reed-Kontakten 22 vorgesehen sein. Mit Hilfe der Reed-Kontakte 22 ist es möglich, festzustellen, ob das Gehäuse der Ladestation 2 sich gegenüber den Reed-Kontakten 22 bewegt, in dem ein Abstand zwischen dem Gehäuse und dem Reed-Kontakt 22 mit Hilfe des Reed-Kontakts 22 gemessen wird. Ferner kann die Überwachungseinrichtung 20 mit einem Erschütterungssensor 24 verbunden sein. Der Erschütterungssensor 24 kann dazu dienen, zu erfassen, ob die Ladestation 2 bewegt wird. Darüber hinaus kann die Überwachungseinrichtung 20 mit einem Licht- oder Photosensor 26 verbunden sein. Mit Hilfe dieses Lichtsensors 26 ist es möglich festzustellen, ob Licht in das Innere der Ladestation 2 gelangt. Dies ist der Fall, wenn das Gehäuse der Ladestation 2 geöffnet wird. Beim Öffnen des Gehäuses kann von einer Manipulation der Ladestation 2 ausgegangen werden.

Auch kann ein Stromsensor 28 vorgesehen sein, der ebenfalls mit der Überwachungseinrichtung 20 verbunden ist. Mit Hilfe des Stromsensors 28 ist es möglich, die Verbindung der Ladestation 2 mit dem Energieversorgungsnetz 4 zu überwachen und bei einer Trennung von dem Energieversorgungsnetz 4 oder einem Ausfall des Energieversorgungsnetzes 4 ein entsprechendes Signal zu erzeugen. Selbiges ist auch mit einem Spannungssensor 29 möglich, der überwacht, ob die Ladestation 2 mit dem Energieversorgungsnetz verbunden ist.

Wenn einer der Sensoren 22-29 eine Verletzung der Integrität der Ladestation 2 feststellt, übermittelt dieser ein Signal an die Überwachungseinrichtung 20. Die

Überwachungseinrichtung 20 erzeugt dann daraufhin einen Steuermarker, der ein Bit, ein Bitsatz oder ein anderes Datum oder ein Signal kann sein. Der Steuermarker wird beispielsweise von der Überwachungseinrichtung 20 an den Datenspeicher 12 übermittelt und in dem nicht flüchtigen Speicher 16 des Messdatenspeichers 12 gespeichert. Auch ist es möglich, dass der Steuermarker über die Kommunikationseinrichtung 18 an den zentralen Abrechnungscomputer über das Internet 30 oder ein anderes Datennetz, beispielsweise über Powerline Communication (PLC) über das Energieversorgungsnetz 4 übertragen wird.

Wenn die Energieversorgung ungestört ist, kann der gesetzte Steuermarker dazu führen, dass unmittelbar der Speicherbaustein 14 tief formatiert wird und alle Messdaten auf dem Speicherbaustein 14 gelöscht werden.

Für den Fall, dass die Energieversorgung unterbrochen ist, können Energiespeicher 32 in der Ladestation angeordnet sein. Die Energiespeicher 32 können beispielsweise Akkumulatoren oder Kondensatoren sein, mit deren Hilfe eine Energiemenge abspeicherbar ist, die dazu ausreicht, zumindest die Überwachungseinrichtung 20 mit den daran angeschlossenen Sensoren 22-29 als auch den Speicherbaustein 14 und/oder die Kommunikationseinrichtung 18 für eine gewissen Zeitdauer zu betreiben.

Wenn die Energieversorgung zusammenbricht, wird dies zum Einen über den Stromsensor 28 oder dem Spannungssensor 29 detektiert und zum Anderen beziehen zumindest die Überwachungseinrichtung 20 und der nicht flüchtige Speicher 16 und/oder die Kommunikationseinrichtung 18 Energie aus dem Energiespeicher 32. Die unterbrochene Energieversorgung kann als Verletzung der Integrität verstanden werden, was dazu führt, dass der Steuermarker durch die Überwachungseinrichtung 20 erzeugt wird und beispielsweise in dem nicht flüchtigen Speicher 16 gespeichert wird. Auch ist es möglich, dass der Steuermarker von der Überwachungseinrichtung 20 über die Kommunikationseinrichtung 18 und das Internet 30 an den zentralen Computer übermittelt wird.

Für den Fall, dass die unterbrochene Energieversorgung noch nicht als Verletzung der Integrität verstanden wird, kann mittels der Sensoren 22-26 weiterhin überwacht werden, ob die Ladestation mechanisch manipuliert wird, z.B. kann eine Zeitschaltuhr eine vorbestimmte Dauer der Unterbrechung der Energieversorgung überwachen. Wird diese Dauer überschritten, z.B. mehr als 2 Minuten, 5 Minuten oder dergleichen, kann der Steuermarker gesetzt werden. Schlägt einer der Sensoren in diesem Zeitraum an, kann durch die Energie der Energiespeicher 32 die Überwachungseinrichtung 20 weiterhin den Steuermarker setzen und in den nicht flüchtigen Speicher 16 speichern oder über die Kommunikationseinrichtung 18 aussenden.

Für den Fall, dass der Messdatenspeicher 12 aus der Ladestation 2 entwendet wird, kann vorgesehen sein, dass sobald der Messdatenspeicher 12 mit Energie versorgt wird, aus dem nicht flüchtigen Speicher 16 der Status des Steuermarkers gelesen wird und der Messdatenspeicher 12 selbsttätig den Speicherbaustein 14 formatiert. In diesem Fall kann der Angreifer den Speicherbaustein 14 nicht mehr auslesen, da dieser formatiert wurde.

Für den Fall, dass die Ladestation 2 komplett entwendet wurde, ist es auch möglich, dass bei einer erneuten Inbetriebnahme der Messdatenspeicher 12 den nicht flüchtigen Speicher 16 selbsttätig ausliest und den Speicherbaustein 14 selbsttätig formatiert, wenn in dem nicht flüchtigen Speicher 16 der Steuermarker gesetzt ist.

Auch ist es möglich, dass die Ladestation 2 bzw. der Mikrocomputer, der die Ladestation 2 steuert, die Kommunikationseinrichtung 18 beim Hochfahren derart ansteuert, dass diese selbsttätig Kontakt mit dem Abrechnungscomputer aufnimmt. Dadurch kann mittels der Kommunikationseinrichtung 18 selbsttätig von dem Abrechnungscomputer der Status des Steuermarkers gelesen werden. Wenn dieser gesetzt wurde, kann selbsttätig durch die Kommunikationseinrichtung 18 ein Steuersignal an den Messdatenspeicher 12 übermitteln werden, das dazu führt, dass der Speicherbaustein 14 formatiert wird.

Mit Hilfe des gezeigten Verfahrens und der gezeigten Ladestation ist es möglich, die in einem Messdatenspeicher gespeicherten sensiblen Daten vor Angriffen zu schützen, in dem die Daten gelöscht werden, sobald ein Angriff auf die Integrität der Ladestation festgestellt wurde.

## Patentansprüche

1. Verfahren zum Sichern einer Ladestation (2), insbesondere einer Ladestation für Elektrofahrzeuge, umfassend:
- Erfassen von Ladevorgänge repräsentierenden Messdaten,
- Speichern der erfassten Messdaten in einem in der Ladestation angeordneten Messdatenspeicher,
- Überwachen der Integrität der Ladestation (2), und
- bei einer detektierten Verletzung der Integrität der Ladestation Setzen eines Steuermarkers, welcher zumindest mittelbar ein Löschen der Messdaten in dem Messdatenspeicher (12) bewirkt,
- wobei der Steuermarker in einem nichtflüchtigen Speicher (16) in der Ladestation (2) oder in einem zentralen Computer gespeichert wird, wobei
- bei einer Wiederaufnahme einer Energieversorgung der Ladestation (2) unmittelbar im Bootvorgang der Ladestation (2) der Steuermarker von einem zentralen Computer abgefragt oder bereitgestellt wird oder in der Ladestation (2) gelesen wird, wodurch das Löschen der Messdaten in dem Messdatenspeicher (12) bewirkt wird, **dadurch gekennzeichnet,**
**dass** ein zumindest die Energiemenge speichernder Energiespeicher (32) vorgesehen ist, um den Sensor (22, 24, 26, 28, 29)zum Detektieren der Verletzung der Integrität der Ladestation (2) auch bei einer unterbrochenen Energieversorgung zu speisen und/oder um die Überwachungseinrichtung (20) zum Ausgeben des Steuermarkers auch bei einer unterbrochenen Energieversorgung zu speisen.

2. Verfahren nach Anspruch 1, **dadurch gekennzeichnet, dass** beim Überwachen der Integrität zumindest die strukturelle Integrität eines Gehäuses der Ladestation (2) oder die Energieversorgung der Ladestation (2) überwacht wird.

3. Verfahren nach Anspruch 1 oder 2, **dadurch gekennzeichnet, dass** mittels eines Energiespeichers (32) zumindest die Energiemenge gespeichert wird, um bei einer Verletzung der Integrität der Ladestation (2) den Steuermarker auszugeben und/oder zu speichern.

4. Verfahren nach einem der Ansprüche 2 bis 3, **dadurch gekennzeichnet, dass** die strukturelle Integrität durch zumindest einen Sensor aus der Gruppe
A) Reed-Kontakt (22);
B) Erschütterungssensor (24);
C) Lichtsensor (26);
D) Photosensor (26);
E) Stromsensor (28);
F) Spannungssensor (29)
erfasst wird.

5. Verfahren nach einem der Ansprüche 1 bis 4, **dadurch gekennzeichnet, dass** die Messdaten durch ein tiefes Formatieren des Messdatenspeichers (12) gelöscht werden.

6. Verfahren nach einem der Ansprüche 1 bis 5, **dadurch gekennzeichnet, dass** die Messdaten zumindest ein Datum aus:
A) Kundennummer;
B) Zählwert eines Energiezählers;
C) Datum;
D) Uhrzeit;
E) Statuswert des Energiezählers;
F) Vertragsnummer,
umfassen.

7. Ladestation für Elektrofahrzeuge mit:
- einer Verbrauchsdaten messenden Messeinrichtung (6),
- einem gemessene Verbrauchsdaten speichernden Messdatenspeicher (12),
- zumindest einem die Integrität der Ladestation überwachenden Sensor (22, 24, 26, 28, 29), und
- einer eine detektierte Verletzung der Integrität der Ladestation (2) anzeigenden Steuermarker ausgebenden Überwachungseinrichtung (20), wobei der Messdatenspeicher (12) beim Vorliegen des Steuermarkers die Messdaten zumindest mittelbar löscht,
- wobei ein nichtflüchtiger Speicher (16) in der Ladestation (2) den Steuermarker speichert oder Kommunikationsmittel (18) vorgesehen sind, um den Steuermarker an einen zentralen Computer zu übermitteln und von einem zentralen Computer zu empfangen, und bei einer Wiederaufnahme der Energieversorgung der Ladestation (2) unmittelbar im Bootvorgang der Ladestation (2) der Steuermarker von der Ladestation (2) lesbar ist, wodurch das Löschen der Messdaten in dem Messdatenspeicher (12) bewirkt wird,
**dadurch gekennzeichnet,**
**dass** ein zumindest die Energiemenge speichernder Energiespeicher (32) vorgesehen ist, um den Sensor (22, 24, 26, 28, 29)zum Detektieren der Verletzung der Integrität der Ladestation (2) auch bei einer unterbrochenen Energieversorgung zu speisen und/oder um die Überwachungseinrichtung (20) zum Ausgeben des Steuermarkers auch bei einer unterbrochenen Energieversorgung zu speisen.

## Claims

1. Method for securing a charging station (2),
in particular a charging station for electric vehicles, comprising:
- detecting measurement data which represent charging operations,
- storing the measurement data detected in a measurement data store which is arranged in the charging station,
- monitoring the integrity of the charging station (2), and
- in the event of a detected breach of the integrity of the charging station, placing a control marker which brings about at least indirectly a deletion of the measurement data in the measurement data store (12),
- wherein the control marker is stored in a non-volatile store (16) in the charging station (2) or in a central computer, wherein
- when an energy supply of the charging station (2) is resumed, directly in the booting operation of the charging station (2) the control marker is requested or provided by a central computer or is read in the charging station (2), whereby the deletion of the measurement data in the measurement data store (12) is brought about,
**characterised in that**
an energy store (32) which stores at least the quantity of energy is provided in order to supply the sensor (22, 24, 26, 28, 29) in order to detect the breach of integrity of the charging station (2) even in the event of an interrupted energy supply and/or in order to supply the monitoring device (20) in order to output the control marker even in the event of an interrupted energy supply.

2. Method according to claim 1, **characterised in that** when the integrity is monitored at least the structural integrity of a housing of the charging station (2) or the energy supply of the charging station (2) is monitored.

3. Method according to claim 1 or 2, **characterised in that** at least the energy quantity is stored by means of an energy store (32) in order to output and/or to store the control marker in the event of a breach of the integrity of the charging station (2).

4. Method according to either claim 2 or 3, **characterised in that** the structural integrity is obtained by means of at least one sensor from the group
A) reed contact (22);
B) vibration sensor (24);
C) light sensor (26);
D) photosensor (26);
E) current sensor (28);
F) voltage sensor (29).

5. Method according to any one of claims 1 to 4, **characterised in that** the measurement data are deleted by means of a deep formatting of the measurement data store (12).

6. Method according to any one of claims 1 to 5, **characterised in that** the measurement data comprise at least one piece of data from:
A) customer number;
B) metering value of an energy meter;
C) date;
D) time;
E) status value of the energy meter;
F) contract number.

7. Charging station for electric vehicles having:
- a measurement device (6) which measures consumer data,
- a measurement data store (12) which stores measured consumption data,
- at least one sensor (22, 24, 26, 28, 29) which monitors the integrity of the charging station, and
- a monitoring device (20) which outputs a control marker which indicates a detected breach of the integrity of the charging station (2), wherein the measurement data store (12) at least indirectly deletes the measurement data when the control marker is present,
- wherein a non-volatile store (16) in the charging station (2) stores the control marker or communication means (18) are provided in order to transmit the control marker to a central computer and to receive it from a central computer, and, in the event of a restoration of the energy supply of the charging station (2), directly in the booting operation of the charging station (2) the control marker can be read by the charging station (2), whereby the deletion of the measurement data in the measurement data store (12) is brought about,
**characterised in that**
an energy store (32) is provided which stores at least the quantity of energy in order to supply the sensor (22, 24, 26, 28, 29) to detect the breach of integrity of the charging station (2) even in the event of an interrupted energy supply and/or in order to supply the monitoring device (20) to output the control marker even in the event of an interrupted energy supply.

## Revendications

1. Procédé pour protéger une borne de recharge (2), en particulier une borne de recharge pour des véhicules électriques, ledit procédé comprenant :
- la saisie de données de mesure représentant des processus de charge,
- le stockage, dans une mémoire de données de mesure disposée dans la borne de recharge, des données de mesure saisies,
- la surveillance de l'intégrité de la borne de recharge (2) et,
- dans le cas d'une dégradation détectée de l'intégrité de la borne de recharge, le positionnement d'un repère de synchronisation qui déclenche au moins indirectement un effacement des données de mesure dans la mémoire (12) des données de mesure,
- où le repère de synchronisation est mémorisé dans une mémoire non volatile (16) placée dans la borne de recharge (2) ou placée dans un ordinateur central où,
- dans le cas d'une reprise d'une alimentation en énergie de la borne de recharge (2), le repère de synchronisation est interrogé ou fourni par un ordinateur central directement au cours du processus d'initialisation de la borne de recharge (2), ou bien est lu dans la borne de recharge (2), grâce à quoi l'effacement des données de mesure est déclenché dans la mémoire (12) des données de mesure,
**caractérisé**
**en ce qu'**il est prévu un accumulateur d'énergie (32) stockant au moins la quantité d'énergie pour alimenter le capteur (22, 24, 26, 28, 29) dans le but de détecter la dégradation de l'intégrité de la borne de recharge (2), également dans le cas d'une alimentation en énergie interrompue, et/ou pour alimenter le dispositif de surveillance (20) dans le but de fournir le repère de synchronisation, également dans le cas d'une alimentation en énergie interrompue.

2. Procédé selon la revendication 1, **caractérisé en ce que**, lors de la surveillance de l'intégrité, est surveillée au moins l'intégrité structurelle d'un boîtier de la borne de recharge (2) ou l'alimentation en énergie de la borne de recharge (2).

3. Procédé selon la revendication 1 ou 2, **caractérisé en ce qu'**au moins la quantité d'énergie est stockée au moyen d'un accumulateur d'énergie (32) pour, dans le cas d'une dégradation de l'intégrité de la borne de recharge (2), fournir et/ou stocker en mémoire le repère de synchronisation.

4. Procédé selon l'une des revendications 2 à 3, **caractérisé en ce que** l'intégrité structurelle est obtenu par au moins un capteur du groupe se composant :
A) d'un contact à languette (22) ;
B) d'un capteur de vibrations (24) ;
C) d'un capteur de lumière (26) ;
D) d'un photocapteur (26) ;
E) d'un capteur de courant (28) ;
F) d'un capteur de tension (29).

5. Procédé selon l'une quelconque des revendications 1 à 4, **caractérisé en ce que** les données de mesure sont effacées par un formatage profond de la mémoire (12) des données de mesure.

6. Procédé selon l'une quelconque des revendications 1 à 5, **caractérisé en ce que** les données de mesure comprennent au moins l'une des données qui suivent :
A) numéro de client ;
B) valeur de comptage d'un compteur d'énergie ;
C) date ;
D) heure ;
E) valeur d'état du compteur d'énergie ;
F) numéro de contrat.

7. Borne de recharge pour des véhicules électriques, comprenant :
- un dispositif de mesure (6) mesurant des données de consommation,
- une mémoire (12) des données de mesure stockant des données de consommation mesurées,
- au moins un capteur (22, 24, 26, 28, 29) surveillant l'intégrité de la borne de recharge, et
- un dispositif de surveillance (20) fournissant un repère de synchronisation indiquant une dégradation détectée de l'intégrité de la borne de recharge (2), où la mémoire (12) des données de mesure, en présence du repère de synchronisation, efface au moins indirectement les données de mesure,
- où une mémoire non volatile (16) mémorise le repère de synchronisation dans la borne de recharge (2), ou bien il est prévu des moyens de communication (18) pour transmettre le repère de synchronisation à un ordinateur central et pour recevoir ledit repère de synchronisation depuis un ordinateur central et, dans le cas d'une reprise de l'alimentation en énergie de la borne de recharge (2), le repère de synchronisation peut être lu par la borne de recharge (2), directement au cours du processus d'initialisation de la borne de recharge (2), grâce à quoi l'effacement des données de mesure est déclenché dans la mémoire (12) des données de mesure,
**caractérisée**
**en ce qu'**il est prévu un accumulateur d'énergie (32) stockant au moins la quantité d'énergie pour alimenter le capteur (22, 24, 26, 28, 29) dans le but de détecter la dégradation de l'intégrité de la borne de recharge (2), également dans le cas d'une alimentation en énergie interrompue, et/ou pour alimenter le dispositif de surveillance (20) dans le but de fournir le repère de synchronisation, également dans le cas d'une alimentation en énergie interrompue.
